# EUROPEAN PATENT SPECIFICATION

(11) **EP 3 235 709 B1**
(45) Date of publication and mention of the grant of the patent: **04.03.2020**
(21) Application number: 16166426.3
(22) Date of filing: 21.04.2016
(51) Int. Cl.: B62D 29/00

(54) **VEHICLE BODY ASSEMBLY**
FAHRZEUGKAROSSERIEAUFBAU
ENSEMBLE DE CARROSSERIE DE VÉHICULE

(43) Date of publication of application: 25.10.2017
(73) Proprietor: Volvo Car Corporation, 40531 Göteborg (SE)
(72) Inventor: Sandberg, Anders, 43362 Sävedalen (SE)
(74) Representative: Valea AB

(56) References cited:
- EP-A1- 2 712 790
- EP-A2- 1 362 768
- WO-A2-2012/129386
- US-A- 3 160 549
- US-A- 6 145 617

## Description

### TECHNICAL FIELD

The invention relates to a vehicle body assembly comprising a main panel and a plastic foam element. The main panel and the plastic foam element are attached to each other by means of a fastening agent.

### BACKGROUND ART

In today's vehicle development, a lot of focus is on reducing costs, both during production and for the end user.

During production this can be done by reducing the amount of material spent, replacing more expensive materials with less expensive materials, reducing the production time etc.

For the end-user, one way to save costs is reduced fuel consumption. Reduced fuel consumption can be the result of many of the same actions taken to reduce cost during production. Reducing the weight of the vehicle will lead to a reduction in fuel consumption, all else being equal. However, reducing the weight of parts of the unibody of a vehicle can lead to an increase in dynamic or static structural stress and a reduction in crashworthiness.

There is thus a need for an improvement in how to reduce the cost and weight of vehicles.

Patent document WO 2012/129386 A2 relates according to its abstract to a panel assembly with a multi-layer patch, which may be used in any number of different applications in order to reduce noise or vibrations, provide thermal insulation, and/or improve the structural integrity of an underlying part. In an exemplary embodiment where the panel assembly is a vehicle part, the panel assembly includes a main panel, a primary adhesive layer, and a multi-layer patch that includes at least two individual patches and at least one auxiliary adhesive layer. The primary adhesive layer attaches the multi-layer patch to the main panel, and the auxiliary adhesive layer attaches the individual patches together. The size, shape, thickness and/or composition of the different layers of the multi-layer patch may be specifically chosen to exhibit certain sound and/or thermal damping properties.

### SUMMARY OF THE INVENTION

The object of the present invention is to provide an inventive vehicle body assembly comprising a main panel and a plastic foam element, wherein the main panel and the plastic foam element are attached to each other by means of a fastening agent. This object is achieved by the features of the characterizing portion of claim 1. Additional features of the invention are set out in the dependent claims.

The invention relates to a vehicle body assembly comprising a main panel and a plastic foam element. The main panel and the plastic foam element are attached to each other by means of a fastening agent. The attachment of the main panel to the plastic foam element is made after forming of the main panel and the plastic foam element. The main panel and the plastic foam element are thereby bonded together to form a composite structure where the plastic foam functions as an oscillation dampener such that the dynamic structural strength of the main panel is increased.

One example advantage of the example embodiments is the ability to reduce the weight of a vehicle body assembly. This is achieved by attaching a main panel and a plastic foam element to form a composite structure. The main panel and the plastic foam element is attached to each other after the main panel and the plastic foam element are separately formed in order for the attachment to be able to be made in the later parts of the assembly process. The attachment of a plastic foam element to the main panel enables the main panel to be made thinner and thereby lighter. The plastic foam element is preferably able to absorb kinetic impacts very well without breaking, able to retain its original shape, and exhibits memory foam characteristics which allow it to return to its original shape in a short amount of time. The plastic foam element absorbs movements in the main panel and transforms at least part of the movement into heat; the plastic foam element thereby functions as an oscillation dampener. The dynamic structural strength is increased by that the endurance of the main panel is increased. The endurance is increased by that metal fatigue caused by vibrations/oscillations in the main panel is reduced or in some cases removed by the plastic foam element. Further, as the plastic foam element is lightweight it does not add significant weight to the composite structure. This enables the amount of the heavier material of the main panel to be reduced by adding a lightweight component to the composite structure while maintaining or increasing the dynamic structural strength depending on the amount of material being removed from the main panel. This also reduces the cost for the main panel.

In some applications existing parts can be used to form the composite structure thereby also reducing the need for development of new parts.

The main panel may be made from sheet metal and the plastic foam element may be made from expanded polypropylene or polyurethane. Expanded polypropylene (EPP) or polyurethane (PU) are two plastic foams that exhibit the desired characteristics.

The fastening agent may be placed over at least part of the surface of the plastic foam element attaching to the main panel. The fastening agent prevents the plastic foam element from moving relative to the main panel and can thereby absorb the movements of the main panel. The fastening agent may be placed at least over the parts of the surface of the plastic foam element which correspond to weaker parts of the main panel in order to increase the dynamic strength of at least these parts of the main panel. The exact parts of the surface of the plastic foam element the fastening agent is to be placed on, is depending on which movements to be prevented. The exact parts are determined by computer aided engineering (CAE) calculations and/or measurements on the completed main panel. The fastening agent may also be placed on the main panel corresponding to the parts of the main panel for which movements is desired to be prevented or both the main panel and the plastic foam element.

The vehicle body assembly may be a spare wheel well, wherein the main panel comprises a spare wheel well floor and the plastic foam element is arranged to the spare wheel well floor. In this example embodiment, the floor of the spare wheel well can be made thinner and thereby weight is reduced. A plastic foam element which today is used to secure the spare wheel can be attached to the spare wheel well floor, thereby forming a composite structure which increases the dynamic structural strength of the thinner spare wheel well floor. This leads to that less material is used while the required dynamic structural strength can be achieved.

The vehicle body assembly may comprise a roof assembly, wherein the main panel comprises a roof panel and the plastic foam element is a roof liner. Similarly to the above example, in this example the roof panel can be made thinner while still maintaining the desired dynamic structural strength.

The vehicle body assembly may comprise a door assembly, wherein the main panel comprises a door panel and the plastic foam element is a door liner. Similarly to the above examples, in this example the door panel can be made thinner while still maintaining the desired dynamic structural strength. This can further lead to that new designs of the door panel are possible which today cannot be made due to the thickness of the door panel. A reduction of the thickness of the door panel thus not only leads to a reduction in weight but can also give rise to a new design of the entire vehicle.

According to the invention a metal reinforcement element is placed between the main panel and the plastic foam element such that the dynamic structural strength of the main panel is further increased. The metal reinforcement element may as an alternative, not included in the vehicle body assembly of claim 1, be placed on the side of the main panel facing away from the plastic foam element such that the dynamic structural strength of the main panel is further increased. In some instances the dynamic structural strength needs to be further increased. This can be done by adding a metal reinforcement element to the composite structure, between the main panel and the plastic foam element. As alternatives, not included in the vehicle body assembly of claim 1, this can be done by adding a metal reinforcement element to the composite structure on the side of the main panel facing away from the plastic foam element or on the plastic foam element creating a sandwich structure.

### BRIEF DESCRIPTION OF THE DRAWINGS

Figures 1a-1e schematically show a first example embodiment,
Figure 2 schematically shows second and third example embodiments.

### DETAILED DESCRIPTION

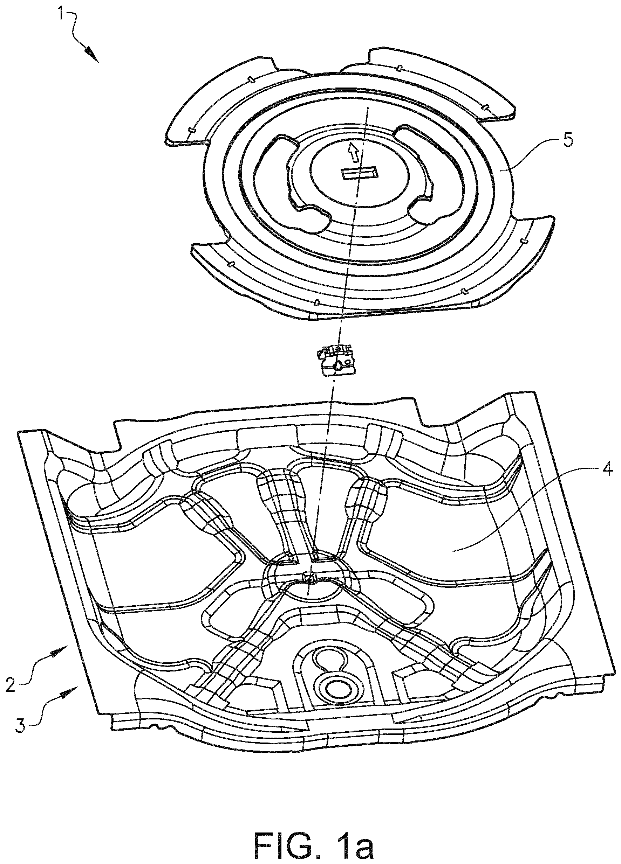

Figures 1a-1e schematically show a first example embodiment.

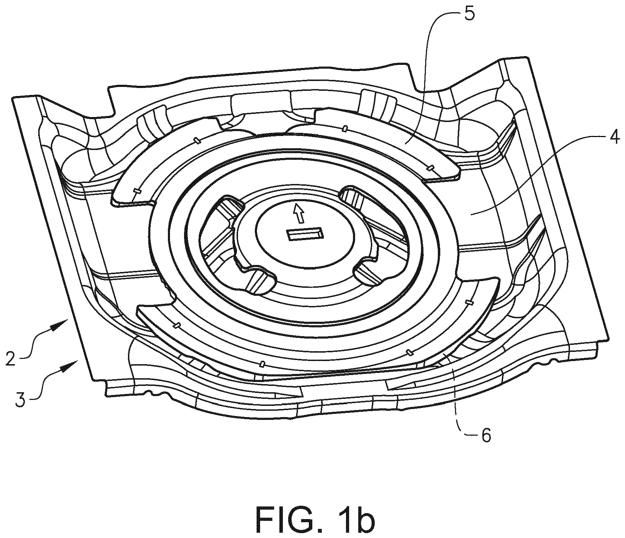

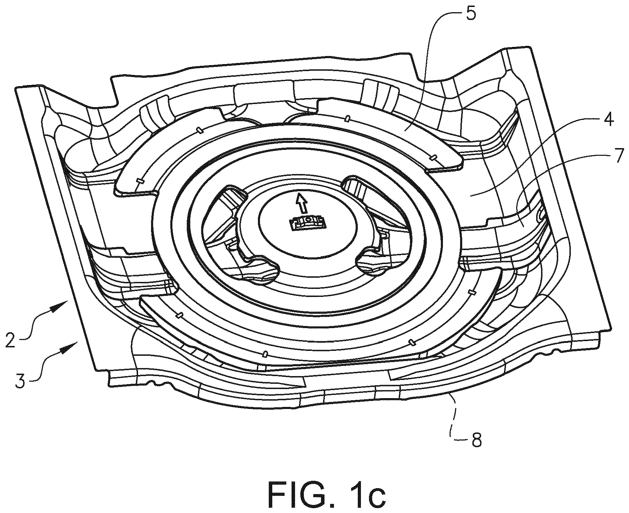

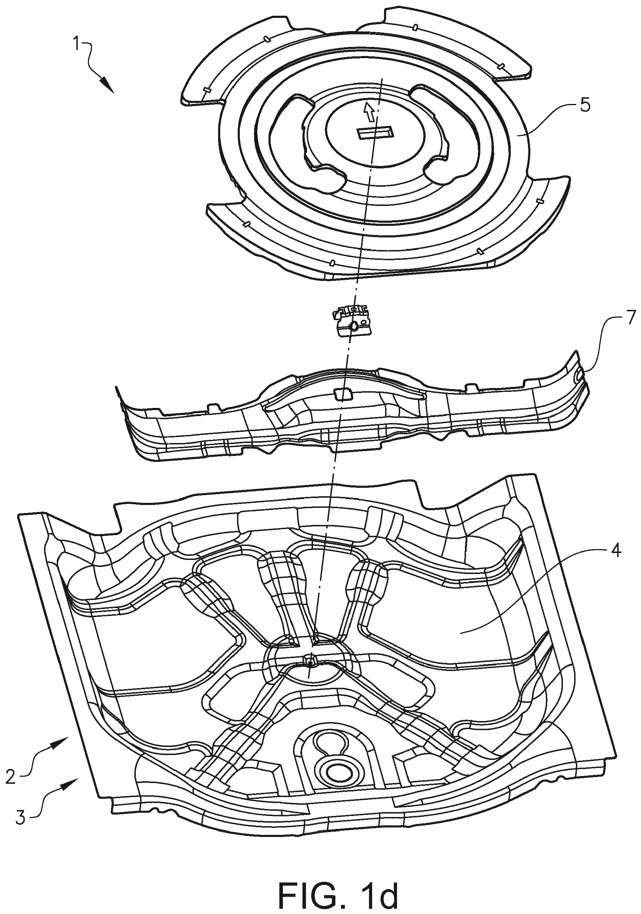

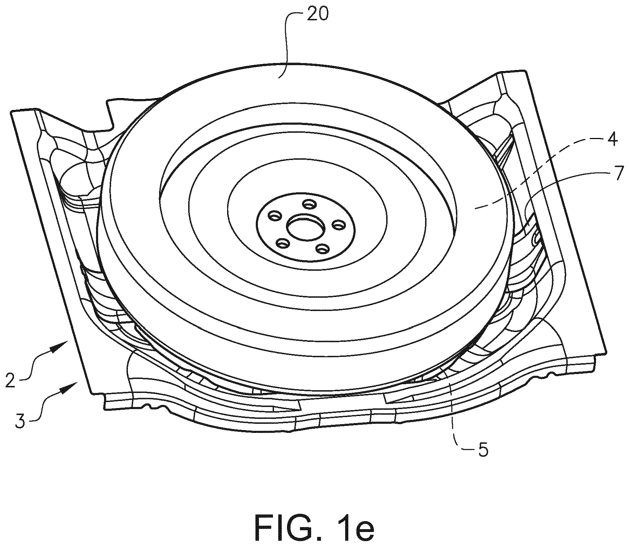

Figure 1a shows a vehicle body assembly 1 wherein the vehicle body assembly 1 is a spare wheel well 2. Figure 1 shows the vehicle body assembly 1 in an exploded view. The spare wheel well 2 comprises a main panel 3 comprising a spare wheel well floor 4 and a plastic foam element 5. The plastic foam element 5 normally functions as a spacer element for separating a spare wheel (not shown) from the spare wheel well floor 4 in order to prevent the spare wheel from damage to the spare wheel well floor 4.

Figure 1b shows the spare wheel well 2 after the attachment of the plastic foam element 5 to the spare wheel well floor 4. The spare wheel well floor 4 and the plastic foam element 5 are bonded together such that the dynamic strength of the spare wheel well floor 4 is increased. The spare wheel well floor 4 and the plastic foam element 5 are attached and bonded to each other by means of a fastening agent. The fastening agent may be an adhesive or a double sided tape. The fastening agent requires good adhesion to both the plastic foam element 5 and to the spare wheel well floor 4. The spare wheel well floor 4 is usually a metal panel with a finish. The attachment of the spare wheel well floor 4 to the plastic foam element 5 is normally made in during interior assembly, i.e. after the main panel 3 has been coated and/or painted, but the attachment can be made earlier in the assembly process.

The plastic foam element 5 is at least attached to the spare wheel well floor 4 by that adhesive is placed over an outer rim 6 of the plastic foam element 5. The outer rim 6 comprises the part of the surface of the plastic foam element 5 which lies closest to the periphery of the plastic foam element 5. The outer rim 6 extends inwards between 5 mm to 50 mm from the periphery of the plastic foam element 5.

Surfaces of the spare wheel well floor 4 that are calculated or measured to be active, i.e. which experiences movement during use of the vehicle are also attached to the plastic foam element 5 to increase the dynamic strength of these surfaces. Alternatively, the entire surface of the plastic foam element 5 can be attached to the main panel 3.

Figure 1c shows that a metal reinforcement element 7 is placed between the main panel 3 and the plastic foam element 5 such that the dynamic structural strength of the main panel 3 is further increased. The metal reinforcement element 7 can be added to the spare wheel well floor 4 in order to make the spare wheel well floor 4 even thinner, thereby further reducing the weight of the spare wheel well floor 4. The metal reinforcement element 7 can for instance be in the shape of a spar, a beam, a plate or a sheet. The combination of the thinner spare wheel well floor 4 and the metal reinforcement element 7 leads to a total reduction in weight of the spare wheel well 2 while maintaining the dynamic strength of the spare wheel well floor 4.

As an alternative, not included in the vehicle body assembly of claim 1, the metal reinforcement element 7 can be placed on a side 8 of the main panel 3 facing away from the plastic foam element 5. Further, the metal reinforcement element 7 can be integrated in the plastic foam element 5 and may also comprise one or more metal wires or hard plastic wires integrated in the plastic foam element 5. Hard plastics used can be for instance acrylonitrile butadiene styrene (ABS) or polyamide (PA). The hard plastic wires are preferably glass fibre reinforced. The metal reinforcement element 7 is placed such that it covers the parts of the spare wheel well floor 4 which experience most movement during use of the vehicle and which is thereby in most need of strengthening.

Figure 1d shows an exploded view of the spare wheel well 2 of figure 1c.

Figure 1e shows the spare wheel assembly with a spare wheel 20 placed on top of the plastic foam element 5 to show the finished spare wheel well assembly.

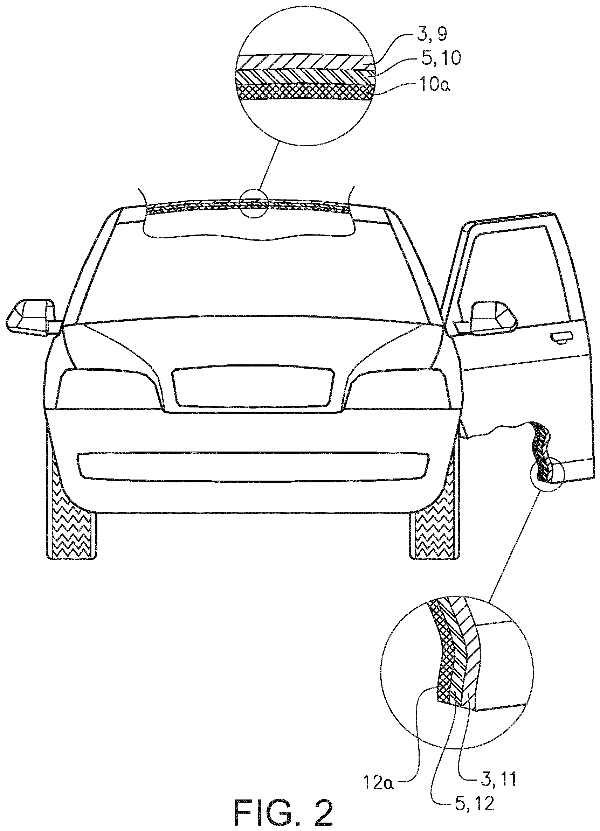

Figure 2 schematically shows second and third example embodiments. In the second embodiment the main panel 3 is a metal roof panel 9 and the plastic foam element 5 is a roof liner 10. The roof liner 10 is attached to the metal roof panel 9 in the same way as described above. Similar to the first example embodiment, the metal roof panel 9 can be made thinner in order to save weight while maintaining the dynamic structural strength of the metal roof panel 9. The roof liner 10 may be covered by an interior roof surface material 10a which is the material visible to a passenger. In the third embodiment the main panel 3 is a metal door panel 11 and the plastic foam element 5 is a door liner 12. The door liner 12 is attached to the metal door panel 11 in the same way as described above. Similar to the first and second example embodiments, the metal door panel 11 can be made thinner in order to save weight. The door liner 12 can have different thicknesses over its surface in order to make room for the various mechanical/electrical parts of a car door. The door liner 12 may be covered by an interior door surface material 12a which is the material visible to a passenger.

It is to be understood from the example embodiments that the technique described herein may be used for other vehicle body assemblies than those explicitly described.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description are to be regarded as illustrative in nature, and not restrictive.

## Claims

1. Vehicle body assembly (1) comprising a main panel (3) and a plastic foam element (5), wherein the main panel (3) and the plastic foam element (5) are attached to each other by means of a fastening agent, **characterized in that** the attachment of the panel to the plastic foam element (5) is made after forming of the main panel (3) and the plastic foam element (5), the main panel (3) and the plastic foam element (5) thereby being bonded together to form a composite structure where the plastic foam functions as an oscillation dampener such that the dynamic structural strength of the main panel (3) is increased, and wherein a metal reinforcement element (7) is placed between the main panel (3) and the plastic foam element (5) such that the dynamic structural strength of the main panel (3) is further increased.

2. Vehicle body assembly (1) according to claim 1, wherein the main panel (3) is made from sheet metal and the plastic foam element (5) is made from expanded polypropylene or polyurethane.

3. Vehicle body assembly (1) according to claim 1 or 2, wherein the fastening agent is placed over at least an outer rim (6) of the plastic foam element (5).

4. Vehicle body assembly (1) according to any one of claims 1-3, wherein the fastening agent is placed over at least part of the surface of the plastic foam element (5) attaching to the main panel (3), the exact parts of the surface of the plastic foam element (5) the fastening agent is to be placed on are determined by computer aided engineering (CAE) calculations and/or measurements on the completed main panel (3).

5. Vehicle body assembly (1) according to any one of the preceding claims, wherein the vehicle body assembly (1) is a spare wheel well (2), wherein the main panel (3) comprises a spare wheel well floor (4) and the plastic foam element (5) is arranged to the spare wheel well floor (4).

6. Vehicle body assembly (1) according to any one of claims 1-4, wherein the vehicle body assembly (1) comprises a roof assembly, wherein the main panel (3) comprises a metal roof panel (9) and the plastic foam element (5) is a roof liner (10).

7. Vehicle body assembly (1) according to any one of claims 1-4, wherein the vehicle body assembly (1) comprises a door assembly, wherein the main panel (3) comprises a door panel and the plastic foam element (5) is a door liner (11).

## Patentansprüche

1. Fahrzeugkarosseriebaugruppe (1), welche eine Hauptplatte (3) und ein Kunststoffschaumelement (5) umfasst, wobei die Hauptplatte (3) und das Kunststoffschaumelement (5) mittels eines Befestigungsmittels aneinander befestigt sind, **dadurch gekennzeichnet, dass** die Befestigung der Platte an dem Kunststoffschaumelement (5) nach dem Ausbilden der Hauptplatte (3) und des Kunststoffschaumelements (5) durchgeführt wird, wobei die Hauptplatte (3) und das Kunststoffschaumelement (5) dabei miteinander verklebt werden, um eine Verbundstruktur zu bilden, wobei der Kunststoffschaum als ein Schwingungsdämpfer wirkt, so dass die dynamische Strukturfestigkeit der Hauptplatte (3) erhöht wird, und wobei ein metallisches Verstärkungselement (7) zwischen der Hauptplatte (3) und dem Kunststoffschaumelement (5) angeordnet ist, so dass die dynamische Strukturfestigkeit der Hauptplatte (3) noch weiter erhöht wird.

2. Fahrzeugkarosseriebaugruppe (1) nach Anspruch 1, wobei die Hauptplatte (3) aus Metallblech hergestellt ist und das Kunststoffschaumelement (5) aus geschäumtem Polypropylen oder Polyurethan hergestellt ist.

3. Fahrzeugkarosseriebaugruppe (1) nach Anspruch 1 oder 2, wobei das Befestigungsmittel über wenigstens einem äußeren Rand (6) des Kunststoffschaumelements (5) angeordnet ist.

4. Fahrzeugkarosseriebaugruppe (1) nach einem der Ansprüche 1-3, wobei das Befestigungsmittel über wenigstens einem Teil der Fläche des Kunststoffschaumelements (5) angeordnet ist, die an der Hauptplatte (3) angebracht ist, wobei die genauen Teile der Fläche des Kunststoffschaumelements (5), auf denen das Befestigungsmittel anzuordnen ist, durch Berechnungen in der rechnergestützten Entwicklung (CAE) und/oder Messungen an der fertigen Hauptplatte (3) bestimmt werden.

5. Fahrzeugkarosseriebaugruppe (1) nach einem der vorhergehenden Ansprüche, wobei die Fahrzeugkarosseriebaugruppe (1) eine Reserveradmulde (2) ist, wobei die Hauptplatte (3) einen Reserveradmuldenboden (4) umfasst und das Kunststoffschaumelement (5) an dem Reserveradmuldenboden (4) angeordnet ist.

6. Fahrzeugkarosseriebaugruppe (1) nach einem der Ansprüche 1-4, wobei die Fahrzeugkarosseriebaugruppe (1) eine Dachbaugruppe umfasst, wobei die Hauptplatte (3) eine metallische Dachplatte (9) umfasst und das Kunststoffschaumelement (5) ein Dachhimmel (10) ist.

7. Fahrzeugkarosseriebaugruppe (1) nach einem der Ansprüche 1-4, wobei die Fahrzeugkarosseriebaugruppe (1) eine Türbaugruppe umfasst, wobei die Hauptplatte (3) eine Türplatte umfasst und das Kunststoffschaumelement (5) eine Türverkleidung (11) ist.

## Revendications

1. Ensemble de carrosserie de véhicule (1) comprenant un panneau principal (3) et un élément en mousse plastique (5), le panneau principal (3) et l'élément en mousse plastique (5) étant fixés l'un à l'autre au moyen d'un agent de fixation, **caractérisé en ce que** la fixation du panneau à l'élément en mousse plastique (5) est effectuée après la formation du panneau principal (3) et de l'élément en mousse plastique (5), le panneau principal (3) et l'élément en mousse plastique (5) étant ainsi collés ensemble pour former une structure composite où la mousse plastique fonctionne comme un amortisseur d'oscillations de sorte que la résistance structurelle dynamique du panneau principal (3) soit augmentée, et un élément de renforcement métallique (7) étant placé entre le panneau principal (3) et l'élément en mousse plastique (5) de sorte que la résistance structurelle dynamique du panneau principal (3) soit encore augmentée.

2. Ensemble de carrosserie de véhicule (1) selon la revendication 1, le panneau principal (3) étant en tôle et l'élément en mousse plastique (5) étant en polypropylène ou en polyuréthane expansé.

3. Ensemble de carrosserie de véhicule (1) selon la revendication 1 ou 2, l'agent de fixation étant placé sur au moins un bord extérieur (6) de l'élément en mousse plastique (5).

4. Ensemble de carrosserie de véhicule (1) selon l'une quelconque des revendications 1 à 3, l'agent de fixation étant placé sur au moins une partie de la surface de l'élément en mousse plastique (5) fixée au panneau principal (3), les parties exactes de la surface de l'élément en mousse plastique (5) sur lesquelles l'agent de fixation doit être placé étant déterminées par des calculs d'ingénierie assistée par ordinateur (CAE) et/ou des mesures sur le panneau principal (3) terminé.

5. Ensemble de carrosserie de véhicule (1) selon l'une quelconque des revendications précédentes, l'ensemble de carrosserie de véhicule (1) étant un passage de roue de secours (2), le panneau principal (3) comprenant un fond de passage de roue de secours (4) et l'élément en mousse plastique (5) étant disposé sur le fond de passage de roue de secours (4).

6. Ensemble de carrosserie de véhicule (1) selon l'une quelconque des revendications 1 à 4, l'ensemble de carrosserie de véhicule (1) comprenant un ensemble de toit, le panneau principal (3) comprenant un panneau de toit métallique (9) et l'élément en mousse plastique (5) étant un revêtement de toit (10).

7. Ensemble de carrosserie de véhicule (1) selon l'une quelconque des revendications 1 à 4, l'ensemble de carrosserie de véhicule (1) comprenant un ensemble de porte, le panneau principal (3) comprenant un panneau de porte et l'élément en mousse plastique (5) étant un revêtement de porte (11).
